# EUROPEAN PATENT SPECIFICATION

(11) **EP 4 409 661 B1**
(45) Date of publication and mention of the grant of the patent: **09.07.2025**
(21) Application number: 21793859.6
(22) Date of filing: 30.09.2021
(51) Int. Cl.: H01M 8/00, B60K 1/04, B60K 1/00

(54) **A SYSTEM, A METHOD OF CONTROLLING A SYSTEM, AND A VEHICLE COMPRISING A SYSTEM**
SYSTEM, VERFAHREN ZUR STEUERUNG EINES SYSTEMS UND FAHRZEUG MIT EINEM SYSTEM
SYSTÈME, PROCÉDÉ DE COMMANDE D'UN SYSTÈME ET VÉHICULE COMPRENANT UN SYSTÈME

(43) Date of publication of application: 07.08.2024
(73) Proprietor: VOLVO TRUCK CORPORATION, 405 08 Göteborg (SE)
(72) Inventor: AUDHAV, Tove, 438 34 LANDVETTER (SE); GAILLAUD, Pierig, 69003 LYON (FR); RAHM, Fredrik, 242 96 HÖRBY (SE)
(74) Representative: Kransell & Wennborg KB
(86) International application number: PCT/EP2021/077010
(87) International publication number: WO 2023/051924

(56) References cited:
- WO-A1-2011/044964
- US-A1- 2004 106 026
- US-A1- 2020 127 312
- US-B2- 10 014 535
- US-B2- 6 701 229

## Description

### TECHNICAL FIELD

The present invention relates to a system for a vehicle, the system having a fuel cell system and a compressed air system. The fuel cell system may at least partially be propelled by an electric traction motor. The present invention also relates to a method of controlling a system, and a vehicle comprising such a system. Although the invention will mainly be directed to a vehicle in the form of a truck using a fuel cell for generating electric power to an electric traction motor, the invention may also be applicable for other types of vehicles using a fuel cell system for generating electric power, such as e.g. a hybrid vehicle comprising an electric machine as well as an internal combustion engine for propulsion.

### BACKGROUND

The propulsion systems of vehicles are continuously developed to meet the demands from the market. A particular technical area of vehicle propulsions systems relates to the emission of environmentally harmful exhaust gases. Therefore, other more environmentally friendly alternatives compared to conventional internal combustion engines are evaluated and implemented in vehicles. One example of such alternatives is the use of one or more electric machines for propelling the vehicle.

In order to generate the electric power for operating the electric machine(s), fuel cell system may be one of the more interesting alternatives. According to an example, the fuel cell system may comprise a vast number of fuel cells forming a fuel cell stack in which an electrochemical reaction of hydrogen and oxygen generates electric power. The fuel cell stack may typically have an anode side in which hydrogen is supplied, and a cathode side in which air is supplied.

The compressed air entering the cathode side may generally be supplied with a high air flow of filtered air. Further, for reasons of balancing the fuel cells in the fuel cell system, the fuel cell system may often be operated at excessive air ratio. While this operation of the fuel cell system means that the air flow is relatively high, the air supplied to the fuel cells may generally also be extremely clean necessitating a well-functioning air filtration at the air inlet.

According to its Abstract, US 2020/127312 A1 discloses one example of a fuel cell system.

The fuel cell system is further not the only system in the vehicle that operates by means of compressed air. Other examples of vehicle systems requiring compressed air during ordinary use of the vehicle are various pneumatic systems, also denoted as compressed air consumers, e.g. air brakes, suspensions, gearbox or any other pneumatic vehicle devices arranged in the vehicle and/or in semi-trailers and trailers connected to the truck.

In view of the above, there is not only a desire to be able to deliver air to the fuel cell system that is less energy-consuming, but also a desire to provide a more beneficial use of the compressed air so as to further improve vehicle system efficiency and vehicle performance.

### SUMMARY

It is thus an object of the present invention to at least partially overcome the above-described deficiencies. This object is achieved by a system according to claim 1. The objective is also achieved by the other independent claims. The dependent claims are directed to advantageous embodiments of the invention.

According to a first aspect, there is provided a system for a vehicle. The system comprises a fuel cell system and a compressed air system for supplying compressed air to a pneumatic device. The fuel cell system comprises at least one fuel cell having an anode side and a cathode side, an air inlet conduit connected to an inlet end of the cathode side for supplying air to the cathode side of the at least one fuel cell, an air compressor disposed in the air inlet conduit, an air filter arranged to receive air from an ambient environment, the air filter being arranged at an inlet of the air inlet conduit and upstream the air compressor, a fluid outlet conduit connected between an outlet end of the cathode side and an inlet side of an expander for supply of an exhaust flow from the cathode side to the expander, and an exhaust conduit connected to an exhaust side of the expander. The compressed air system comprises an electrically operable air compressor connectable to the pneumatic device.

In addition, the system comprises a controllable valve assembly for fluidly connecting an air inlet of the electrically operable air compressor to multiple fluid supply positions, the multiple fluid supply fluid positions comprising at least two positions selected from an outlet conduit position upstream the inlet side of the expander, an air inlet conduit position upstream the air compressor, an air inlet conduit position downstream the air compressor and a position in fluid communication with an independent air filter in fluid communication with the ambient environment.

Also, the controllable valve assembly is configured to selectively direct air from the multiple fluid supply positions to the compressed air system in response to an operating condition of the vehicle.

The present invention is based on the insight that the fuel cells of a fuel cell system may often be operated at excessive air ratio to provide a certain balance in the fuel cell(s) and that such excessive air ratio may be useful for other vehicle pneumatic systems (comprising separate air compressors) so as to improve the general system efficiency and vehicle performance since the power to drive the vehicle air compressor can be reduced. By way of example, the air booster in the fuel cell may generally have a high air flow of filtered air (and some water) being transferred to and from the fuel cell cathode side. At least for these reasons, the air flow is high but also clean, which necessitates a decent air filtration at the air inlet of the cathode side. In addition, the vehicle pneumatic systems, such as the air brake system of the vehicle may be operable by means of its own air compressor system. Such air compressor system may further be electrically driven, at least in electric vehicles. For the vehicle brake system air compressor, there is also an air filter to protect from particles etc.

The proposed system provides a dynamic, yet efficient and versatile way of supplying air from a position in the cathode side of the fuel cell system, or optionally from an independent air filter, to an electrically operable air compressor of a compressed air system of the vehicle on the basis of the driving situation of the vehicle. In particular, the compressed air system is configured to receive air from the cathode side of the at least one fuel cell. The provision of the controllable valve assembly arranged in-between the compressed air system and the fuel cell system, and optionally connected to the independent air filter, thus provides for an improved control of operating various pneumatic devices connectable to the electrically driven air compressor by means of air supplied from a position either upstream (before) the fuel cell stack or downstream (after) the fuel cell stack. Some of the pneumatic devices may thus be completely operated by air from the fuel cell system air compressor, while other types of pneumatic devices may at least partly be operated by air from the fuel cell system air compressor together with air from other vehicle systems. In this manner, the proposed system provides improved air properties to the compressed air system and the pneumatic device, e.g. providing pressurized and/or filtered air, while safeguarding that such supply of air is performed in a controlled manner on the basis of the operation of the fuel cell system.

By way of example, the proposed system allows for using filtered air from the filter of the fuel cell system at the fuel cell cathode side to boost the electrically driven vehicle air compressor of another compressed air system of the vehicle, such as the compressed air system for operating the brake system. In particular, the additional filter at the vehicle brake compressor inlet can be omitted. Hence, it becomes possible to provide a simple, yet effective system comprising the fuel cell system and the compressed air system.

One advantage of supplying air from the independent air filter is that the operation through such separate filter may generally not affect the fuel cell stack/fuel cell system, which can be beneficial or sometimes needed for the operation of the fuel cell stack.

In addition, the proposed system may have a positive impact on the size and weight of the fuel cell system and the compressed air system compared to prior art systems because the power to drive the compressor of the compressed air system can be reduced. By way of example, the brake system power consumption may be reduced and the packaging space of the air brake system may be improved. In addition, the compressed air system may be provided without its own air filter as the system makes use of air filter at the inlet conduit of the fuel cell system. Hence, the proposed system may also provide for using downsized components so as to allow for reducing the costs of the components making up the system, e.g. the brake system power consumption may be reduced. The proposed system may also have a positive impact on the service time of system since there are fewer parts to exchange (e.g. fewer filters).

One advantage with connecting the electrically operable air compressor to the position upstream the inlet side of the expander is that the compressed air system receives air from the fuel cell system with a relatively high pressure level. In addition, by supplying air from the outlet conduit at a position downstream the at least one fuel cell but upstream the expander, the proposed system allows for using excessive pressurized air coming out of the fuel cell stack in the electrically operable air compressor of the compressed air system. It may be noted that the invention here generally refers to the air which is not used in the fuel cell stack (and which is not water in the exhaust).

Typically, the air may be supplied from a position in the outlet conduit that is downstream any humidifier and/or water separator since the brake air system may also be using a water separator.

When the controllable valve assembly is arranged and configured to fluidly connect the air inlet of the electrically operable air compressor to the outlet conduit position, the controllable valve assembly may be configured to direct air from the outlet conduit position to the compressed air system if the operating condition amounts to a fuel cell performance priority condition. In addition, or alternatively, when the controllable valve assembly is arranged and configured to fluidly connect the air inlet of the electrically operable air compressor to the air inlet conduit position, the controllable valve assembly may be configured to direct air from the air inlet conduit position to the compressed air system if the operating condition amounts to a compressed air system performance priority condition. In addition, or alternatively, when the controllable valve assembly is arranged and configured to fluidly connect the air inlet of the electrically operable air compressor to the air inlet conduit position, the controllable valve assembly may be configured to direct air from the air inlet conduit position to the compressed air system if the operating condition amounts to a fuel cell shut down condition. In addition, or alternatively, when the controllable valve assembly is arranged and configured to fluidly connect the air inlet of the electrically operable air compressor to the position, the controllable valve assembly may be configured direct air from the position to the compressed air system if the operating condition amounts to a fuel cell shut down condition.

Typically, the fuel cell system may comprise the expander. The expander should be understood as being a component arranged to expand the exhaust flow from the outlet end of the cathode side of the at least one fuel cell. The expander may, according to an example embodiment, be a turbine. As an alternative, the expander may be a piston expander. Other further alternatives are also conceivable, such as e.g. a roots expander or a scroll expander.

In one example embodiment, a part of the outlet conduit extending between the outlet end of the at least one fuel cell and the inlet side of the expander may comprise a first outlet conduit portion, a second outlet conduit portion and a water management component. Further, the first outlet conduit portion connects the outlet end of the at least one fuel cell to an inlet side of water management component, and the second outlet conduit connects an outlet side of the water management component to the inlet side of the expander. Also, the outlet conduit position is at the second outlet conduit portion.

In one example embodiment, when the electrically operable air compressor is connected to the position upstream the inlet side of the expander, the electrically operable air compressor may be connected to the second outlet conduit.

In one example embodiment, the fuel cell system may further comprise a charge air cooler arranged in the inlet conduit. Typically, and according to an example embodiment, the fuel cell system may further comprise a charge air cooler, the charge air cooler being arranged in the inlet conduit in fluid communication between the compressor and the inlet end of the cathode side. In one example embodiment, a part of the inlet conduit extending between the air compressor and the inlet end of the cathode side may comprise a first inlet conduit portion, a second inlet conduit portion and the charge air cooler. The first inlet conduit portion connects the air compressor to the charge air cooler, and the second inlet conduit connects the charge air cooler to the inlet end of the cathode side. Also, in this arrangement, the air inlet conduit position is at the second inlet conduit portion and downstream the charge air cooler.

The fuel cell system may further comprise a humidifier connected to the inlet conduit and the outlet conduit. The humidifier may be configured to change the humidity of the inlet air and transfer water from the outlet conduit to the inlet conduit. Also, in this arrangement, the air inlet conduit position is upstream the humidifier.

In one example embodiment, when the fuel cell system comprises the charge air cooler and the humidifier, the humidifier is connected to the second inlet conduit portion and to the first outlet conduit portion.

In one example embodiment, when the fuel cell system comprises the expander, the air compressor may be connected to the expander and a fuel cell motor. The fuel cell motor should be construed as a motor included in the fuel cell system. The motor is generally configured to drive the air that is transferred through the at least one fuel cell. The wording should thus not be interpreted as the motor being a fuel cell. Further, the exhaust flow from the cathode side may contain air, water, hydrogen, or any combination thereof.

By way of example, the air compressor is mechanically connected to the expander and the fuel cell motor by means of a compressor shaft. As an alternative, the fuel cell motor could be connected to the compressor by means of a first shaft, while the fuel cell motor is connected to the expander by means of a second shaft, where the first and second shafts are different shafts. The compressor and expander may also be provided with separate motors. Such arrangement enables an improved boost and backpressure, as well as more flexibility for further optimization of the system.

The fuel cell system may comprise an outlet conduit valve arrangement arranged in the outlet conduit. By way of example, the fuel cell system comprises an outlet conduit valve arrangement arranged in the first outlet conduit portion. The outlet conduit valve arrangement may be configured to prevent air to flow to the at least one fuel cell via the outlet conduit when the at least one fuel cell is in any one of an inactive state or non-operative state. The fuel cell system may further comprise an inlet conduit valve arrangement arranged in the inlet conduit. By way of example, the inlet conduit valve arrangement is arranged in the second inlet conduit portion. The inlet conduit valve arrangement may be configured to prevent air to flow to the fuel cell via the inlet conduit when the fuel cell is in any one of an inactive state or non-operative state. The fuel cell system may further comprise a fuel cell by-pass conduit extending between the inlet conduit and the outlet conduit and a by-pass conduit valve arrangement disposed in the fuel cell by-pass conduit, the by-pass conduit valve arrangement being configured to open and close the fuel cell by-pass conduit in response to an activation state of the electrically operable air compressor. By way of example, the fuel cell by-pass conduit is connected to a position of the first inlet conduit portion and to position of the second outlet conduit portion. The fuel cell by-pass conduit may be connected to a position in the inlet conduit that is upstream the fuel cell and to a position in the outlet conduit that is downstream the fuel cell. Optionally, the by-pass conduit valve arrangement may be configured to open and close the fuel cell by-pass conduit in response to a control signal from the control unit.

In regard to the control of the controllable valve assembly and the general control of the system, it should be readily appreciated that the actual flow of air between the fuel cell system and the compressed air system may further be controlled in cooperation with other operational data of the vehicle. Such data may generally be stored in the control unit, such as the electronic control unit, ECU. Hence, the system may further comprise a control unit arranged in communication with the controllable valve assembly so as to control the valve assembly based on a control signal indicative of the operating condition of the vehicle. The control unit may include a control circuitry.

The control unit may include a microprocessor, microcontroller, programmable digital signal processor or another programmable device. Thus, the control unit typically comprises electronic circuits and connections as well as the control circuitry, e.g. processing circuitry such that the control unit can communicate with the controllable valve assembly and with different parts of the system including the fuel cell system and the compressed air system as well as with other components of the vehicle. Such parts and systems may include the balance of plants components, various pressure sensors, temperature sensors or any other component of the vehicle in order to provide the functions of the example embodiments. The control unit may comprise modules in either hardware or software, or partially in hardware or software and communicate using known transmission buses such as CAN-bus and/or wireless communication capabilities. The processing circuitry may be a general purpose processor or a specific processor. The control unit may typically comprise a non-transistory memory for storing computer program code and data upon. Thus, the control unit may be embodied by many different constructions. The control unit may be part of the controllable valve assembly. In other embodiments, the control unit may be part of another system or component and configured to communicate with controllable valve assembly, either by wire or wireless, as is known in the art. In other embodiments, the control unit is an integral part of any one of the system, the fuel cell system and the compressed air system. In addition, or alternatively, the control unit may comprise a number of sub-control units arranged in any one of the system, the fuel cell system and the compressed air system, each one of the sub-control units being configured to communicated with each other so as to form the control unit.

The operating condition of the vehicle may generally correspond to a state of the vehicle. The operating condition may refer to any one of the fuel cell performance priority condition, the compressed air system performance priority condition and the fuel cell shut down condition. The vehicle may in other words be operated in a number of operating modes requiring a certain power demand from the system. The operating mode may, for example, relate to an operational state of the vehicle. The power demand may, for example, relate to an increased power requirement for the fuel cell. Other examples of operating modes and power demands may be an inactive mode (e.g. a shut-down fuel cell system state), a vehicle start-up mode with a fuel cell having a temperature level below a predetermined threshold limit, i.e. a cold start operating mode etc. The operating conditions may be determined based on data from the control unit and/or from a number of vehicle sensors configured to gather data relating to the various operating conditions.

The controllable valve assembly typically comprises a control valve. By way of example, the control valve is a so-called selective valve. In other words, the controllable valve assembly may be controllable by the control unit to selectively control the flow of air in response to a control signal indicating the determined operating condition such that air is supplied to the electrically operable air compressor from: the outlet conduit position if the operating condition amounts to the fuel cell performance priority condition; the air inlet conduit position if the operating condition amounts to the compressed air system performance priority condition; the air inlet conduit position if the operating condition amounts to the fuel cell shut down condition; and/or the independent air filter position if the operating condition amounts to the fuel cell shut down condition.

The control unit may actuate the controllable valve assembly pneumatically or electrically, as is commonly known in the art. The controllable valve assembly may include a switch actuator. By way of example, the switch actuator may have a solenoid actuator operable to move part of the controllable valve assembly to open and close any one of the inlet ports. Typically, the controllable valve assembly comprising the associated switch actuator is controllable in response to the input signal from the control unit. Hence, the switch actuator may be configured to operate the controllable valve assembly on the basis of the instructions from the control unit.

In addition, any one of the above valve arrangements may be controlled by the control unit for directing the air flow from the fuel cell system to the compressed air system. The control unit may also be in communication with the fuel cell system and the compressed air system, wherein the control circuitry is configured to control the flow of air from the fuel cell system to the electrically operable air compressor in response to any one of an operating mode of the vehicle and a power demand from the vehicle. In particular, the control circuitry may be operable to control the flow of air from the fuel cell system to the electrically operable air compressor in response to a change in any one of the operating mode of the vehicle and the power demand from the vehicle. The change in operating mode of the vehicle may e.g. be a change from an inactive mode of the fuel cell system to an active mode of the fuel cell system. Analogously, the change in power demand of the vehicle may e.g. be an increase or decrease in the power demand from the vehicle. The electrically operable air compressor may also be controlled in response to an activation state of the fuel cell.

The control unit may be operable to control any one of the above-mentioned valve arrangements in response to a received control signal indicating the activation state of the fuel cell. Each one of the valve arrangements may be controllable in a coordinated manner by the control unit in response to the operating mode of the vehicle. By way of example, in an operating situation when the control unit receives a control signal indicating that the fuel cell is to be set in its in-active state, the control unit may control the inlet conduit and outlet conduit valve arrangements to set in a closed state, while controlling the by-pass conduit valve arrangement and the inlet valve arrangement of the compressed air system to be set in an open state, respectively. In this manner, no flow of air is directed to the fuel cell. Rather, the flow of air is allowed to flow in the by-pass conduit and through the controllable valve assembly to the electrically operable air compressor. Hereby, the air compressor is capable of operating in an active state so as to provide a sufficient pressure and flow for the electrically operable air compressor.

It is to be noted that the term "multiple fluid supply positions", as used herein, may refer to several different types of combinations of positions, as described herein. Typically, although strictly not required, there is provided a controllable valve assembly for fluidly connecting an air inlet of the electrically operable air compressor to any one of an outlet conduit position upstream the inlet side of the expander and an air inlet conduit position upstream the air compressor, and further to at least to one of an air inlet conduit position downstream the air compressor and a position in fluid communication with an independent air filter in fluid communication with an ambient environment.

Also, the controllable valve assembly is configured to selectively direct air from any one of the outlet conduit position and the air inlet conduit position and at least from one of the air inlet conduit position and the position to the compressed air system in response to an operating condition of the vehicle.

In one example embodiment, the at least two positions are the air inlet conduit position upstream the air compressor and the air inlet conduit position downstream the air compressor. In one example embodiment, the at least two positions are the outlet conduit position upstream the inlet side of the expander and the position in fluid communication with an independent air filter in fluid communication with an ambient environment. In one example embodiment, the multiple fluid supply positions comprises at least three positions, the three positions being at least the outlet conduit position upstream the inlet side of the expander, the air inlet conduit position upstream the air compressor and the air inlet conduit position downstream the air compressor. In one example embodiment, the multiple fluid supply positions comprises at least three positions, the three positions being at least the outlet conduit position upstream the inlet side of the expander, the air inlet conduit position downstream the air compressor and the position in fluid communication with an independent air filter in fluid communication with an ambient environment.

According to a second aspect, there is provided a method for controlling a system of a vehicle. The system comprises a fuel cell system and a compressed air system for supplying compressed air to a pneumatic vehicle device. The fuel cell system comprises at least one fuel cell having an anode side and a cathode side, an air inlet conduit connected to an inlet end of the cathode side for supplying air to the cathode side of the at least one fuel cell, an air compressor disposed in the air inlet conduit, an air filter arranged to receive air from an ambient environment, the air filter being arranged at an inlet of the air inlet conduit and upstream the air compressor, a fluid outlet conduit connected between an outlet end of the cathode side and an inlet side of an expander for supply of an exhaust flow from the cathode side to the expander, and an exhaust conduit connected to an exhaust side of the expander. The compressed air system comprises an electrically operable air compressor connectable to the pneumatic vehicle device. The system further comprises a controllable valve assembly for fluidly connecting an air inlet of the electrically operable air compressor to multiple fluid supply positions, the multiple fluid supply fluid positions comprising at least two positions selected from an outlet conduit position upstream the inlet side of the expander, an air inlet conduit position upstream the air compressor, an air inlet conduit position downstream the air compressor and a position in fluid communication with an independent air filter in fluid communication with the ambient environment. The method comprises: determining an operating condition of the vehicle, and operating the controllable valve assembly to selectively direct air from the multiple fluid supply positions to the compressed air system in response to determined operating condition of the vehicle. In other words, the controllable valve assembly is operable by the control unit so as to selectively direct air from any one of the outlet conduit position, the air inlet conduit position, the air inlet conduit position and the position to the compressed air system in response to determined operating condition of the vehicle.

Effects and features of the second aspect are largely analogous to those described above in relation to the first aspect.

The method may further comprise operating the controllable valve assembly to direct air from the outlet conduit position to the compressed air system if the operating condition amounts to a fuel cell performance priority condition. The method may further comprise operating the controllable valve assembly to direct air from the air inlet conduit position to the compressed air system if the operating condition amounts to a compressed air system performance priority condition. The method may further comprise operating the controllable valve assembly to direct air from the air inlet conduit position to the compressed air system if the operating condition amounts to a fuel cell shut down condition. In addition, if the operating condition amounts to a combined compressed air system performance priority and a fuel cell shut down condition, the method may further comprise closing air supply to the fuel cell by controlling at least one control valve arrangement of the fuel cell system and further operating the air compressor by a fuel cell motor to pre-boost the electrically operable air compressor.

It should be noted that generally only a small part of the air flow is directed to the electrically operable air compressor, while the major flow of air is continuing as usual in the fuel cell system, at least when the fuel cell stack is operated.

The method may further comprise controlling the flow of air from the fuel cell system to the compressed air system based on an activation state of the electrically operable air compressor. The method may further comprise controlling the flow of air in a by-pass channel extending between inlet conduit and the outlet conduit and the flow of air to and from the at least one fuel cell based on the activation state of the electrically operable air compressor. The method may further comprise controlling any one of the above-mentioned valve arrangements in response to a control signal from the control unit indicating the activation state of the at least one fuel cell. Each one of the valve arrangements may be controllable in a coordinated manner by the control unit in response to the operating mode of the vehicle.

According to a third aspect, there is provided a vehicle at least partially propelled by an electric traction motor, the electric traction motor being electrically connected to a fuel cell system according to any one of the embodiments described above in relation to the first aspect.

Effects and features of the third aspect are largely analogous to those described above in relation to the first aspect.

The air compressor of the fuel cell system may advantageously be operated to increase the pressure level of the intake air to levels suitable for the fuel cell. The air compressor may also be operated to increase the temperature level of the intake air.

The compressed air system may generally refer to a separate part of the system that is connectable to the fuel cell system by means of the controllable valve assembly and optionally an inter-connecting conduit. The electrically operable air compressor is arranged to provide compressed air to the pneumatic device of the vehicle. By way of example, the electrically operable air compressor may be arranged to compress received air and transmit the compressed air to an air brake system.

The compressed air system may include additional components. Optionally, the compressed air system may include an air production modulator, APM. The APM is configured to dry/clean the compressed air and distribute it to the compressed air consumers such as the air brakes, suspensions, gearbox or any other pneumatic devices. Further, a control unit may be in communication with and configured to control the electrically operable air compressor on the basis of a selected drive mode of the vehicle.

The pneumatic device is arranged in fluid communication with the electrically operable air compressor. The pneumatic device may be a vehicle pneumatic device such as an air braking system of the vehicle, a suspension system of the vehicle, an on-board crane system, a hauling system or any other type of auxiliary system of the vehicle operable by means of compressed air. The pneumatic device may also be an external system connectable to the vehicle.

Further features of, and advantages will become apparent when studying the appended claims and the following

The terminology used herein is for the purpose of describing particular examples only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof. Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of a vehicle in the form of a truck;
Fig. 2 is a schematic illustration of an example embodiment of a system comprising a fuel cell system in fluid communication with a compressed air system and a vehicle pneumatic device;
Fig. 3 is a schematic illustration of another example embodiment of a system comprising a fuel cell system in fluid communication with a compressed air system and a vehicle pneumatic device; and
Fig. 4 is a flow chart of a method of controlling the fuel cell system according to an example embodiment.

### DETAILED DESCRIPTION

The present invention will now be described more fully hereinafter with reference to the accompanying drawings, in which exemplary embodiments are shown. The invention may, however, be embodied in many different forms and should not be construed as limited to the embodiments set forth herein; rather, these embodiments are provided for thoroughness and completeness. Like reference character refer to like elements throughout the description.

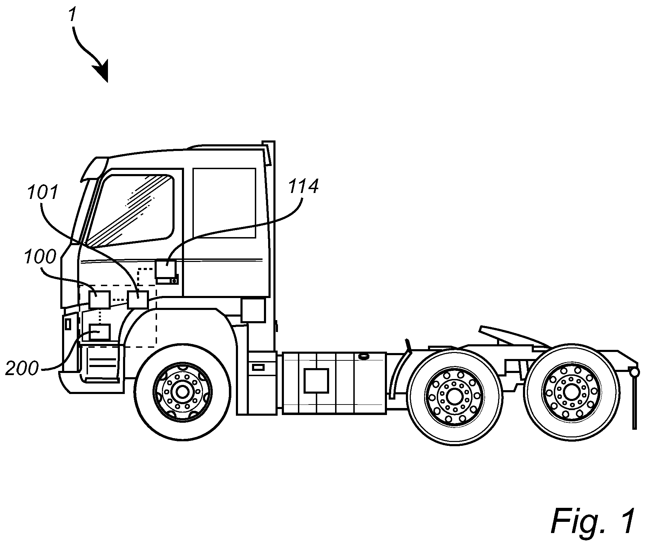

With particular reference to Fig. 1, there is depicted a vehicle 1 in the form of a truck. The vehicle comprises a traction motor 101 for propelling the wheels of the vehicle. The traction motor 101 is here provided in the form of an electric machine arranged to receive electric power from a battery (not shown) or directly from a fuel cell system 100 which is described in further detail below. The fuel cell system 100 is part of a system 10. The system 10 further comprises a compressed air system 200 in fluid communication with the fuel cell system 100, as described herein. The vehicle 1 also comprises a control unit 114 for controlling various operations and functionalities as will also be described in further detail below.

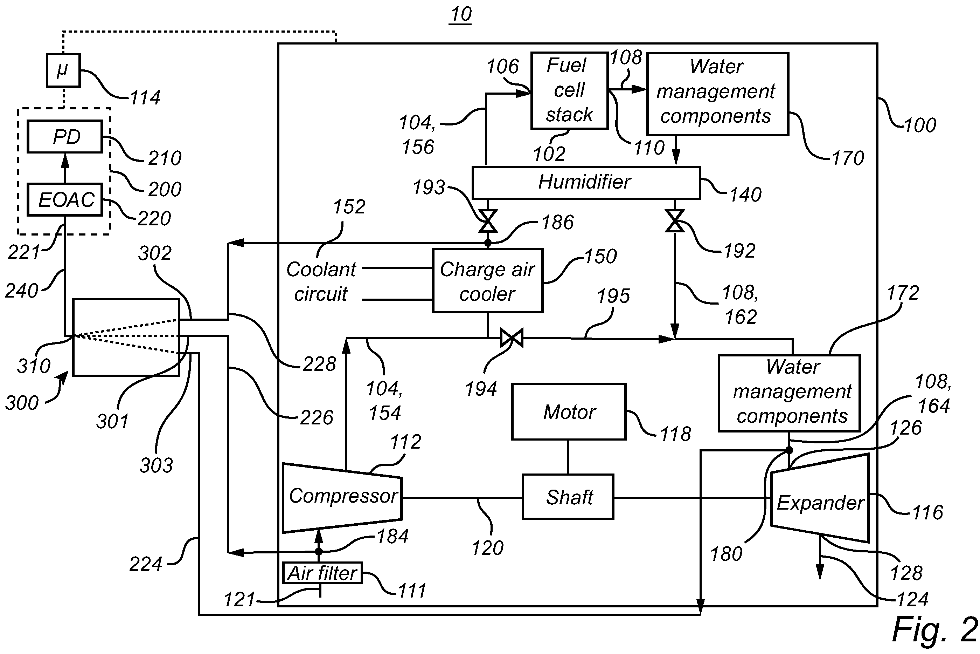

In order to describe the system 10 in more detail, reference is made to Fig. 2 which is a schematic illustration of the system according to an example embodiment. The system 10 comprises the fuel cell system 100 and the compressed air system 200. The compressed air system 200 is further arranged in fluid communication with a pneumatic device 210 of the vehicle, or an external pneumatic device connected to the vehicle. As such the compressed air system 200 is arranged to supply compressed air to the pneumatic device 210. Further details of the compressed air system will be described below.

The fuel cell system 100 comprises at least one fuel cell 102, also commonly referred to as a fuel cell stack. The at least one fuel cell 102 may generally be composed of more than one fuel cell, such as two fuel cells or a plurality of fuel cells. The fuel cells may form a so-called fuel cell stack. The fuel cells may likewise be arranged in multiple fuel cell stacks, each fuel cell stack comprising multiple fuel cells arranged in a stack configuration. In regard to the fuel cell stack 102 of the fuel cell system 100, each one of the fuel cells making up the fuel cell stack 102 generally comprises an anode side receiving hydrogen as a fuel component and a cathode side receiving compressed air as another fuel component. While there are several different types of fuel cells, distinguished mainly by the type of electrolyte used, a so-called Proton Exchange Membrane (PEM) fuel cell is particularly suitable for use in heavy-duty vehicles, such as the vehicle 1 in Fig. 1. Hence, the fuel cell 102 is here a PEM fuel cell stack.

Turning to Fig. 2, the fuel cell 102 is schematically illustrated and only depicts the cathode side, i.e. the anode side is omitted for simplifying the illustration. Other components such as balance of plant components could also be included in the fuel cell system as are commonly used in the field of fuel cell system.

The fuel cell system 100 further comprises an inlet conduit 104 connected to an inlet end 106 of the cathode side of the fuel cell 102. The inlet conduit 104 is arranged to supply air to the cathode side. The inlet conduit 104 has an inlet 121 in fluid communication with the ambient environment, as illustrated in Fig. 2. The fuel cell system 100 also comprises an outlet conduit 108 connected to an outlet end 110 of the fuel cell 102 cathode side. Hereby, exhaust flow is supplied from the outlet end 110 of the fuel cell 102 and into the outlet conduit 108.

Furthermore, the fuel cell system 100 comprises an air compressor 112. The air compressor 112 is disposed in the inlet conduit 104, as depicted in Fig. 2. In particular, the air compressor 112 is arranged upstream the fuel cell 102 in the inlet conduit 104.

In addition, the fuel cell system 100 comprises an expander 116, and optionally a fuel cell motor 118. The air compressor 112 is connected to the expander 116 and the fuel cell motor 118. The air compressor 112 may be an electrical compressor or a mechanical compressor. The expander 116 may be a turbine. The air compressor and expander are commonly known components in the fuel cell system and thus not further described herein.

By way of example, and according to the depicted example embodiment of Fig. 2, the air compressor 112, the expander 116 and the fuel cell motor 118 are mechanically connected to each other by means of a compressor shaft 120. Hence, the fuel cell motor 118 is arranged to control and operate the air compressor 112 and the expander 118. The air compressor 112 is arranged to receive, and pressurize ambient air 122. The ambient air is supplied to the air compressor 112 via an air filter 111, as illustrated in Fig. 2. The pressurized ambient air is subsequently supplied through the inlet conduit 104 and provided to the inlet end 106 of the fuel cell 102. As illustrated in Fig. 2, the air filter 111 is arranged upstream the air compressor 112. In addition, the air filter 111 is arranged at an inlet 121 of the air inlet conduit 104. The fuel cell system 100 thus comprises the air filter 111 arranged to receive air from the ambient environment.

The expander 116 is connected to the outlet conduit 108 and thus receives, and expands the exhaust flow from the outlet end 110 of the fuel cell 102. The air expanded from the expander 116 is supplied into an exhaust conduit 124 of the fuel cell system 100. In other words, the outlet conduit 108 is connected between the outlet end 110 of the cathode side of the fuel cell and an inlet side 126 of the expander 116 for supplying exhaust from the cathode side to the expander 116. Hence, the outlet conduit 108 is connected to the inlet side 126 of the expander 116, while the exhaust conduit 124 is connected to an exhaust side 128 of the expander 116. The exhaust side 128 of the expander 116 is then connected to the ambient environment. Alternatively, the exhaust side 128 may be connected to a water tank and then exhausted. Thus, expanded air supplied from the expander into the exhaust conduit 124 can be directed to the ambient environment.

By means of the example embodiment depicted in Fig. 2, ambient air 122 is received by the air compressor 112, via the filter 111. The air compressor 112 pressurizes the air and supplies the pressurized air towards the inlet end 106 of the fuel cell 102, where electric power is generated. The fuel cell 102 exhausts cathode exhaust through the outlet end 110 and into the outlet conduit 108. The exhaust flow is further directed into the expander 116, which expands the air and supplies the expanded air to the exhaust conduit 124.

As a further alternative, and as depicted in the exemplified embodiment, the fuel cell system 100 here comprises a humidifier 140 connected to the inlet conduit 104 and the outlet conduit 108. The humidifier 140 is configured to transfer humidity from the outlet conduit 108 to the inlet conduit 104. The humidifier may control the intake air as well as the exhaust flow from the fuel cell 102 at a desired humidity level.

As illustrated in Fig. 2, the fuel cell system 100 may also comprise a charge air cooler 150, such as a charge air intercooler, arranged in the inlet conduit 104. By way of example, the charge air cooler 150 is positioned in fluid communication between the compressor 112 and the inlet end 106 of the fuel cell 102. When providing a charge air cooler 150 in combination with a humidifier 140, the charge air cooler 150 is arranged in fluid communication between the air compressor 112 and the humidifier 140. The charge air cooler 150 is configured to controllably adjust the intake air before the intake air is supplied to the inlet end 106 of the fuel cell 102. The charge air cooler 150 is here connected to a cooling system or cooling circuit 152 of the vehicle 1, as is commonly known in the art. Although not illustrated, it should also be readily noted that the fuel cell 102 (fuel cell stack) is generally connected to a coolant circuit, as is commonly known in the art.

It should be noted that the inlet conduit 104 may include a number of sub-conduits and additional components. In the example embodiment depicted in Fig. 2, a part of the inlet conduit 104 extending between the air compressor 112 and the inlet end 106 of the cathode side comprises a first inlet conduit portion 154, a second inlet conduit portion 156 and the charge air cooler 150. The first inlet conduit portion 154 connects the air compressor 112 to the charge air cooler 150 and the second inlet conduit 156 connect the charge air cooler 150 to the inlet end 106 of the cathode side.

In Fig. 2, when the inlet conduit 104 and the outlet conduit 108 are defined by first and second conduits, respectively, the humidifier 140 is connected to the second inlet conduit portion 156 and the first outlet conduit portion 162.

As mentioned above, the system 10 also comprises the compressed air system 200 in fluid communication with the fuel cell system 100. As such, the fuel cell system 100 and the compressed air system 200 are arranged to permit a partial flow of air from the cathode side to the compressed air system 200. The fuel cell system 100 is connected and in fluid communication with a controllable valve assembly 300, as will be further described below in relation to Figs. 2 to 4.

The compressed air system is generally configured to pressurize air to a certain level to generate a steady stream of airflow, which may be used for the proper function of pneumatic devices. While the compressed air system generally includes a number of components, such as a compressor, an air cooler, air receiver tank, a dryer and a distribution system, one example of a compressed air system suitable for the system 10 will now be further described herein.

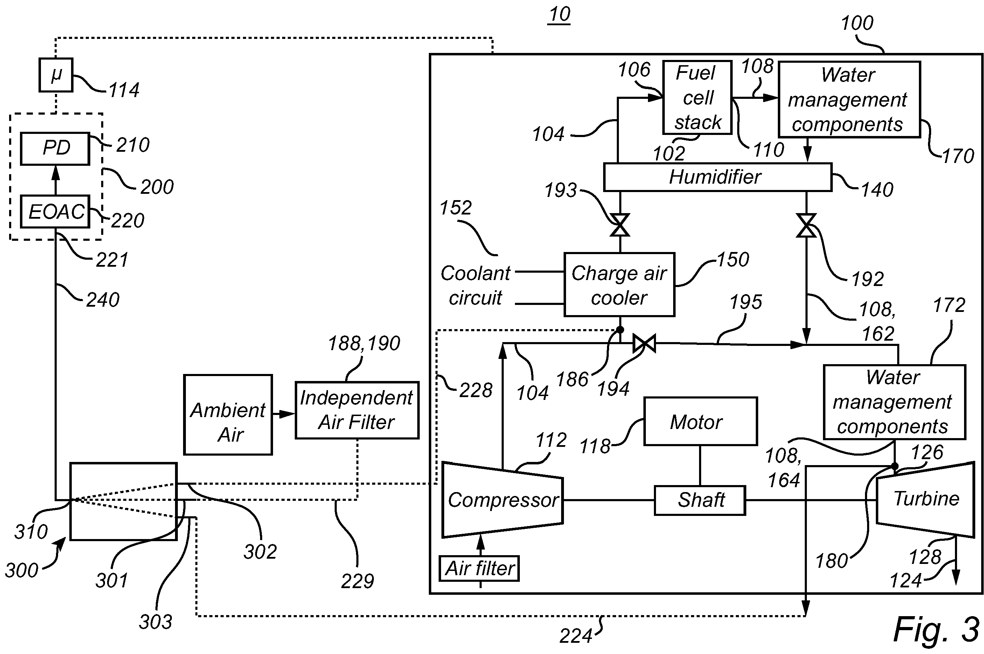

As illustrated in Fig. 2, the compressed air system 200 comprises an electrically operable air compressor, EOAC, 220. The electrically operable air compressor 220 comprises an air inlet 221 for receiving air from the fuel cell system 100 (Fig. 2), or from the fuel cell system 100 and an independent air filter 190 (Fig. 3). The electrically operable air compressor 220 is arranged to compress the received air, and transmit the compressed air to a pneumatic device 210 that is powered by compressed air. The pneumatic device 210 is thus in fluid communication with the electrically operable air compressor 220. In this example, the pneumatic device 210 is a braking system. In other words, the electrically operable air compressor 220 is arranged to provide compressed air to the braking system of the vehicle. The compressed air is generally the main working fluid to achieve the braking function. However, the compressed air system may be connected to other types of pneumatic devices of the vehicle, such as a suspension system of the vehicle, an on-board crane system, a hauling system, pneumatic controllable actuators such as CLB (i.e. (Backpressure device), an EGR valve, a buffer air for bearing systems or any other types of auxiliary devices and/or systems of the vehicle operable by means of compressed air. The pneumatic system can operate in different modes according to various driving phases/modes when the vehicle is moving and/or, if relevant for the type of truck, according to various operating modes when the vehicle is at work at null speed.

The electrically operable air compressor 220 is generally operated by an electric motor. The electric motor can either be the motor 118 or another electric motor (not shown) that is comprised in the vehicle. Thus, the electrically operable air compressor is an electric operated air compressor. The connection between the electrically operable air compressor 220 and the electric motor is mechanical. Typically, no clutch or any device for selective connection is provided between the electrically operable air compressor 220 and the rotor of the electric motor. The electric motor is typically powered by the battery of the vehicle and/or by electric power from the fuel cell system. Other options may also be contemplated depending on type of vehicle. Optionally, the compressed air system may include an air production modulator, APM (although not shown). The function of the APM is to dry/clean the compressed air and distribute it to the compressed air consumers such as the air brakes, suspensions, gearbox or any other pneumatic devices. Further, the control unit 114 is here configured to control the electrically operable air compressor 220 on the basis of a selected drive mode of the vehicle.

Turning again to the fuel cell system 100 illustrated in Fig. 2, the fuel cell system 100 here comprises a number of optional water management components 170 and 172. The water management components 170 and 172 are disposed in the outlet conduit 108. The water management components 170 and 172 are adapted to work as a water separator, i.e. to remove any water from the exhausted air from the fuel cell. Alternatively, or in addition, the water management component may be comprised in the humidifier 140. In a fuel cell system 100 comprising one or more water management components, it may be favorable to extract air to the compressed air system 200 downstream the water management components. It may also be possible to provide a fuel cell system without any water management component in the outlet conduit. Hence, these water management components are generally optional components of the fuel cell system 100.

In the example embodiment illustrated in Fig. 2, a part of the outlet conduit 108 extending between the outlet end 110 of the fuel cell 102 and the inlet side 126 of the expander 116 comprises a first outlet conduit portion 162, a second outlet conduit portion 164 and the water management component 172. Further, as illustrated in Fig. 2, the first outlet conduit portion 162 connects the outlet end 110 of the fuel cell 102 to an inlet side 171 of the water management component 172, and the second outlet conduit 164 connects an outlet side 173 of the water management component 172 to the inlet side 126 of the expander 116. Moreover, as illustrated in Fig. 2, the first outlet conduit 162 interconnects the outlet end 110 of the fuel cell 102 with the water management component 170 and the humidifier 140, which are disposed fluidly in-between the outlet end 110 of the fuel cell 102 and the inlet side 126 of the expander 116. Other arrangements of the components may also be possible.

Optionally, as illustrated in Fig. 2, the fuel cell system 100 may comprise one or more valves 192, 193, 194 for regulating the flow direction of the air in the cathode side of the fuel cell system 100. The valve arrangements 192, 193, 194 are generally configured to block the flow of air in a certain direction and/or shut down the fuel cell 102 from the ambient environment when the fuel cell 102 is shut down. By way of example, each one of the valve arrangements is a conventional on-off valve, also denoted as a shut off valve. On-off valves can be provided in several different manners, such as ball valves, butterfly valves, gate valves, plug valves and the like.

The fuel cell system 100 as depicted in Fig. 2 comprises an outlet conduit valve arrangement 192 arranged in the first outlet conduit portion 162. The outlet conduit valve arrangement 192 is configured to prevent that air can flow to the fuel cell 102 in the outlet conduit 108 when the fuel cell 102 is in an inactive state or non-operative state. By way of example, the inactive state or non-operative state of the fuel cell corresponds to a state when the fuel cell system is shut-down. In other words, the outlet conduit valve arrangement 192 is operable to block the flow of air from the ambient environment at the exhaust side 124 of the fuel cell system 100 to the fuel cell 102 in its inactive state or non-operative state. The outlet conduit valve arrangement 192 is controllable by the control unit 114. By way of example, the outlet conduit valve arrangement 192 is configured to open and close the flow passage in the outlet conduit 108 in response to a control signal from the control unit 114. Hence, when the fuel cell system 100 is in an operating state, the outlet conduit valve arrangement 192 is controlled by the control unit 114 to be in an open state, thus permitting a flow of air from the fuel cell 102 to the compressed air system 200. However, when the fuel cell system 100 is in the non-operative state, the outlet conduit valve arrangement 192 is controlled by the control unit 114 to be in a closed state, thus preventing a flow of air from the ambient environment to the fuel cell 102.

In addition, the fuel cell system 100 as depicted in Fig. 2 comprises an inlet conduit valve arrangement 193 arranged in the second inlet conduit portion 156. The inlet conduit valve arrangement 193 is configured to prevent that air can flow to the fuel cell 102 in the inlet conduit 104 when the fuel cell 102 is in the inactive state or non-operative state. In other words, the inlet conduit valve arrangement 193 is operable to block the flow of air from the ambient environment at the inlet side 121 of the fuel cell system 100 to the fuel cell 102 in its inactive state or non-operative state. The inlet conduit valve arrangement 193 is controllable by the control unit 114. By way of example, the inlet conduit valve arrangement 193 is configured to open and close the flow passage in the inlet conduit 104 in response to a control signal from the control unit 114. Hence, when the fuel cell system 100 is in the operating state, the inlet conduit valve arrangement 193 is controlled by the control unit 114 to be in an open state, thus permitting a flow of air from ambient environment at 121 to the fuel cell 102. However, when the fuel cell system 100 is in the non-operative state, the inlet conduit valve arrangement 193 is controlled by the control unit 114 to be in a closed state, thus preventing a flow of air from the ambient environment at 121 to the fuel cell 102.

Typically, the valves 192 and 193 are normally set in a closed state when the fuel cell stack is in the inactive state and/or in the shut-down state. Otherwise, it may not be possible to control that there is no backflow into the fuel cell 103 with unfiltered air/exhaust or a so called drying of the system.

Moreover, as illustrated in Fig. 2, the fuel cell system 100 as depicted in Fig. 2 comprises a fuel cell by-pass conduit 195. The fuel cell by-pass conduit 195 extends between the inlet conduit 104 and the outlet conduit 108. By way of example, the fuel cell by-pass conduit 195 is connected to a position of the first inlet conduit portion 154 and to position of the second outlet conduit portion 162, as illustrated in Fig. 2. In other words, the fuel cell by-pass conduit 195 is connected to a position in the inlet conduit that is upstream the fuel cell 102 and to a position in the outlet conduit that is downstream the fuel cell 102. Optionally, the fuel cell by-pass conduit 195 comprises a by-pass conduit valve arrangement 194. The by-pass conduit valve arrangement 194 is configured to open and close the fuel cell by-pass conduit 195 in response to a control signal from the control unit 114. By way of example, when the fuel cell system 100 is in the operating state, the by-pass conduit valve arrangement 194 is controlled by the control unit 114 to be in a closed state, thus preventing a flow of air in the by-pass conduit 195 while directing the air through the fuel cell 102. On the other side, when the compressed air system is to be operated, e.g. when the electrically operable air compressor 220 is to receive and compress air from the outlet conduit 108, the by-pass conduit valve arrangement 194 is controlled by the control unit 114 to be in an open state, thus permitting a flow of air in the by-pass channel 195. In this manner, it becomes possible to reduce the risk of having the electrically operable air compressor 220 to use unfiltered air that may flow from the ambient environment at 124 and backwards in the outlet conduit 108.

Depending on the location of the charge air cooler, the by-pass conduit valve arrangement 194 and by-pass conduit 195 may be arranged upstream the charge-air-cooler. In such example, the by-pass conduit valve arrangement 194 may be a three-way valve.

Generally, although strictly not necessary, each one of the valve arrangements 192, 193 and 194 is controllable in a coordinated manner by the control unit 114 in response to the operating mode of the vehicle. The operating mode of the vehicle here refers to an operating mode of the fuel cell system 100 and the operating mode of the compressed air system 200. By way of example, the valve arrangements 192, 193, 194 are operable in response to a control signal from the control unit 114 indicating the activation state of the fuel cell 102. In a situation when the control unit 114 receives a control signal indicating that the fuel cell 102 is to be set in its in-active state (to be shut down), the control unit 114 controls the valve arrangements 192 193 to be set in a closed state, while controlling the valve arrangement 194 to be set in an open state. In this manner, no flow of air is directed to the fuel cell 102. Rather, the flow of air is allowed to flow in the by-pass conduit 195 and to the electrically operable air compressor 220. Hereby, the air compressor 112 is capable of operating in an active state so as to provide a sufficient pressure and flow for the electrically operable air compressor 220. However, as described above, the usual operation of the system 100 is that the flow of air passes through the fuel cell 102 and then though the conduit 224 and valve 225, rather than through the valve 194 and the by-pass conduit 195.

To sum up, the fuel cell system 10 comprises a number of valve arrangements 192, 193, 194 operable in response to the activation state of the fuel cell system 100 and the compressed air system 200 (e.g. the activation state of the electrically operable air compressor 220).

In order to control the flow of air from the fuel cell system 100 to the compressed air system 200, the system 10 comprises a controllable valve assembly 300, as will now be further described in relation to Fig. 2. In Fig. 2 there is depicted one example embodiment of the system 10, in which the compressed air system 200 is connected to the fuel cell system 100 both at the inlet conduit 104 and at the outlet conduit 108 by the controllable valve assembly 300.

As depicted in Fig. 2, the controllable valve assembly 300 is arranged and configured to fluidly connect the air inlet 221 of the electrically operable air compressor 220 to an outlet conduit position 180 upstream the inlet side 126 of the expander 116, an air inlet conduit position 184 upstream the air compressor 112 and an air inlet conduit position 186 downstream the air compressor 112. By way of example, the controllable valve assembly 300 comprises three inlet ports 301, 302, 303 and one outlet port 310.

In particular, the inlet port 301 of the controllable valve assembly 300 is fluidly connected to the air inlet conduit position 184 upstream the air compressor 112 of the fuel cell system. By way of example, the inlet port 301 of the controllable valve assembly 300 is fluidly connected to the air inlet conduit position 184 upstream the air compressor 112 by means of an inter-connecting conduit 226. Analogously, the inlet port 302 of the controllable valve assembly 300 is fluidly connected to the air inlet conduit position 186 downstream the air compressor 112 of the fuel cell system. By way of example, the inlet port 302 of the controllable valve assembly 300 is fluidly connected to the air inlet conduit position 186 downstream the air compressor 112 by means of an inter-connecting conduit 228. In Fig. 2, the air inlet conduit position 186 is at the second inlet conduit portion 156 and downstream the charge air cooler 150. Moreover, in Fig. 2, the air inlet conduit position 186 is upstream the humidifier 140. Favourably, the air inlet conduit position 186 is also upstream the inlet conduit valve arrangement 193.

Analogously, the inlet port 303 of the controllable valve assembly 300 is fluidly connected to the outlet conduit position 180 of the fuel cell system 100. By way of example, the inlet port 303 of the controllable valve assembly 300 is fluidly connected to the outlet conduit position 180 by means of an inter-connecting conduit 224. By connecting the air inlet 221 of the electrically operable air compressor 220 to the outlet conduit 108 via the valve assembly 300, the electrically operable air compressor 220 is arranged to receive exhaust air from the cathode side of the fuel cell 102. In Fig. 2, the outlet conduit position 180 is at the second outlet conduit portion 164.

In a similar vein, the outlet port 310 of the controllable valve assembly 300 is fluidly connected to the inlet of the electrically operable air compressor 220 by means of an inter-connecting fluid conduit 240.

The controllable valve assembly 300 is here configured to selectively direct air from the outlet conduit position 180, the air inlet conduit position 184 and the air inlet conduit position 186 to the compressed air system 200 in response to an operating condition of the vehicle. The controllable valve assembly 300 is thus provided as a selective valve assembly.

The operating condition of the vehicle generally corresponds to a steady-state condition of the vehicle. By way of example, the operating condition refers to any one of a fuel cell performance priority condition, a compressed air system performance priority condition and a fuel cell shut down condition.

As mentioned above, the system 10 is operable by means of the control unit 114. The control unit 114 comprises a control circuitry (not shown) configured to control the flow of air from the fuel cell system 100 to the compressed air system 200 by controlling the controllable valve assembly 300. In particular, the control unit 114 is arranged in communication with the controllable valve assembly 300 so as to control the controllable valve assembly 300 based on a control signal indicative of the operating condition of the vehicle. The control unit 114 may also be connected to a vehicle control system for receiving signals indicative of e.g. a current operating mode for the vehicle. Generally, the power of the fuel cell 102 is one input data for controlling the air flow to the electrically operable air compressor 220. Thus, the power of the fuel cell 102 may be decisive for the compressor speed of the electrically operable air compressor 220. In particular, the control unit 114 is operable to control the flow of air from the fuel cell system 100 to the electrically operable air compressor 220 in response to a change in any one of the operating modes of the vehicle and the power demand from the vehicle. In addition, or alternatively, the electrically operable air compressor 220 may be controlled in response to the activation state of the fuel cell 102.

In the example embodiment illustrated in Fig. 2, the controllable valve assembly 300 is configured to direct air from the outlet conduit position 180 to the compressed air system 200 if the operating condition amounts to the fuel cell performance priority condition. This position is favourable for the vehicle at least partly due to that the supplied air contains a higher water content and may be more beneficial for the fuel cell performance, the air is of relatively low pressure (as compared to air in the inlet conduit 104), and that the temperature of the air is at least similar or slightly higher than the temperature of the air in the inlet conduit 104. In addition, the air supplied from the outlet conduit may contain less oxygen since the fuel cell consumes oxygen with hydrogen gas, which will thus provide the compressed air system with less oxidizing gas. Compressed air with less oxidizing gas may be an advantage for a pneumatic device such as an air brake system.

In the example embodiment illustrated in Fig. 2, the controllable valve assembly 300 is further configured to direct air from the air inlet conduit position 186 to the compressed air system 200 if the operating condition amounts to the compressed air system performance priority condition. This position provides for supplying air having a relatively low humidity (atmospheric humidity), which is more favourable for electrically operable air compressor 220. In addition, this position provides for supplying air with similar or slightly lower temperature than exhaust side / outlet conduit of the fuel cell system 100. Typically, although strictly not necessary, this option of supplying air from the inlet conduit 104 may benefit from controlling the air compressor 112 of the fuel cell system, such as the speed of the compressor 112 in a coordinated fashion with the operation of the electrically operable air compressor 220.

In the example embodiment illustrated in Fig. 2, the controllable valve assembly 300 is further configured to direct air from the air inlet conduit position 184 to the compressed air system 200 if the operating condition amounts to the fuel cell shut down condition. One example of a fuel cell shut down condition corresponds to the start of a trip. Such priority fuel cell shut down condition may be beneficial when the vehicle is to start up and there is a desire or need for building up pressure in pressure tanks and therefore run the electric operable air compressor. Due to fuel consumption/degradation/noise, it could also be relevant to maintain the fuel cell in a shut-down mode at the start of trips and then operate only on the battery.

The controllable valve assembly 300 is favourably actuated by a solenoid corresponding to a valve actuator, as is commonly known in the art of control valves for fluids. However, many types of actuation are available, such as electric, pneumatic and hydraulic actuation of the controllable valve assembly in response to the control signal from the control unit 114. The controllable valve assembly may also comprise an actuating piston arranged inside the valve body. By way of example, the controllable valve assembly 300 operates by actuating a number of pistons inside the valve body, to divert fluid flow as needed. When one piston is actuated to a closed position, it creates a seal against the body, thereby stopping all flow through one port of the valve, while when the piston is actuated to the open position, fluid is allowed to flow from the inlet to the outlet. The above is merely one example of a possible controllable valve assembly 300 that can be used for controlling the flow of air between the fuel cell system 100 and the compressed air system 200.

The following will now describe various example embodiments of how to control the flow of air in the above-described system 10. According to a first example embodiment, the vehicle is operated in a normal operating mode in which no additional power is required by the fuel cell 102 to generate electric power. In addition, in this normal operating mode, the compressed air system 200 is operated according to a normal mode, in which no or less compressed air is needed from the electrically driven air compressor 220. Then, when the control unit 114 receives a control signal indicative of a desire to increase power of the vehicle 10, typically increasing the power from the fuel cell 102, the control unit 114 determines to priorities the performance of the fuel cell (i.e. the fuel cell performance priority condition) and thus sends a control signal to the controllable valve assembly 300 to control the flow of air such that air is supplied to the electrically operable air compressor from the outlet conduit position. In another operating situation, the control unit 114 receives a control signal indicative of a desire to increase the power of pneumatic device, e.g. due to a heavy and urgent braking event. Accordingly, the control unit 114 determines to priorities the compressed air system performance (i.e. the compressed air system performance priority condition) and thus sends a control signal to the controllable valve assembly 300 to control the flow of air such that air is supplied to the electrically operable air compressor from the air inlet conduit position 186.

In yet another driving situation, the control unit 114 receives a control signal indicative of a decision to shut down the fuel cell. Accordingly, the control unit 114 determines that such decision amounts to a fuel cell shut down condition and thus sends a control signal to the controllable valve assembly 300 to control the flow of air such that air is supplied to the electrically operable air compressor from the air inlet conduit position 184. Alternatively, as illustrated in Fig. 3, the control unit 114 sends a control signal to the controllable valve assembly 300 to control the flow of air such that air is supplied to the electrically operable air compressor from the independent air filter position 188.

In another example embodiment, as depicted in Fig. 3, the system 10 comprises the independent air filter 190 in fluid communication with the ambient environment. The independent air filter may be a separate part of the system 10 or an integral part of another pneumatic system of the vehicle. The air filter 190 is in fluid communication with the ambient environment for receiving fresh air from the outside. In Fig. 3, the controllable valve assembly 300 is thus arranged and configured to fluidly connect the air inlet 221 of the electrically operable air compressor to the outlet conduit position 180 upstream the inlet side of the expander, the air inlet conduit position 184 upstream the air compressor 112 and a position 188 in fluid communication with an independent air filter 190 in fluid communication with an ambient environment. In Fig. 3, the inlet port 301 of the controllable valve assembly 300 is fluidly connected to the independent air filter 190 of system. By way of example, the inlet port 301 of the controllable valve assembly 300 is fluidly connected to the independent air filter 190 by means of an inter-connecting conduit 229. Besides the above connection of the inlet port 301 of the controllable valve assembly in Fig. 3, the inlet ports and outlet port of the valve assembly 300 correspond to the ones described above in relation to Fig. 2.

The controllable valve assembly 300 is here configured to selectively direct air from the outlet conduit position 180, the air inlet conduit position 184 and the position 188 to the compressed air system 200 in response to an operating condition of the vehicle. The controllable valve assembly 300 is thus provided as a selective valve assembly.

In the example embodiment illustrated in Fig. 3, when the controllable valve assembly 300 is arranged and configured to fluidly connect the air inlet 221 of the electrically operable air compressor to the independent air filter position 188, the controllable valve assembly 300 is also configured to direct air from the independent air filter position 188 to the compressed air system 200 if the operating condition amounts to the fuel cell shut down condition.

While the above arrangements of the controllable valve assembly 300 in Figs. 2 and 3 have been described in relation to a system having three multiple fluid supply positions, it should be readily appreciated that the system 10 may combine the arrangements describe above in relation to Figs. 2 and 3. In other words, in yet another example embodiment, although not explicitly illustrated, the controllable valve assembly 300 is arranged and configured to fluidly connect the air inlet 221 of the electrically operable air compressor 220 to the outlet conduit position 180 upstream the inlet side 126 of the expander 116, the air inlet conduit position 184 upstream the air compressor 112, the air inlet conduit position 186 downstream the air compressor 112 and the independent air filter position 188. In such arrangement and configuration of the controllable valve assembly 300, the controllable valve assembly may thus comprise four inlet ports for each one of the of connections as described above in relation to Figs. 2 and 3, where the valve assembly select one position of the four positions 180, 184, 186 or 188 for supply of air to the electrically operable air compressor 220. Alternatively, it may be possible to provide a control assembly having one 3-way valve followed by a 2-way valve, or vice versa. In other words, the controllable valve assembly is operable by the control unit to first choose if the air is taken from the FC system or the independent air filter, and subsequently, if air is taken from the FC cathode system, further chose one of the positions 180, 184 or 186.

Further, the controllable valve assembly 300 can be arranged and configured to fluidly connect the air inlet 221 of the electrically operable air compressor 220 to two of the above fluid supply positions 180, 184, 186 and 188. Hence, in one example embodiment (not explicitly illustrated), the at least two positions are the air inlet conduit position 184 upstream the air compressor 112 and the air inlet conduit position 186 downstream the air compressor 112. In one example embodiment, the at least two positions are the outlet conduit position 180 upstream the inlet side of the expander 116 and the position 188 in fluid communication with the independent air filter 190 in fluid communication with the ambient environment. In these example embodiments, the controllable valve assembly 300 may be a selective valve with one outlet and two inlets.

Although not depicted in Fig. 2, it should also be readily appreciated that the fuel cell system 100 may comprise one or more temperature sensors and pressure sensors to provide further control data for the control unit and the system. The application of such sensors in a fuel cell system is generally arranged in view of the type of fuel cell system and vehicle, as is commonly known in the art. The fuel cell system may also contain temperature sensors in the fuel cell, or in a housing of the fuel cell. Hereby, the temperature level of the fuel cell can be determined.

Also, as mentioned above, a further example embodiment of the system 10 is illustrated in Fig. 3. The fuel cell system in Fig. 2 and the fuel cell system in Fig. 3 shares the above-described features described and illustrated in Fig. 2 except that the controllable valve assembly 300 in Fig. 3 is connected to the position 188 of the filter 190 rather than to the position 184 of the filter 111 of the fuel cell system 100, as described in relation to Fig. 2.

It may also be possible to provide a fuel cell system 100 as described in any one of the Figs. 2 and 3 without some of the components and features above. By way of example, although not expressly illustrated, the system 10 may comprise a fuel cell system 100 without one or more of the valves 192, 193, 194 and the by-pass conduit 195 as well as the water management components.

Regarding the control unit 114, the control unit may for example be an electronic control unit (ECU) comprised with the vehicle. However, the control unit may likewise be provided by a number of sub-control units (not illustrated), wherein each one of the control units may generally comprise a corresponding control circuitry, processor or the like. By way of example, the fuel cell system comprises a first sub-control unit and the compressed air system comprises a second sub-control unit, wherein the sub-control units are arranged in communication with each other so as to form the control unit 114. To this end, the sub-control units are collectively configured to control the flow of air from the fuel cell system to the electrically operable air compressor in response to any one of an operating mode of the vehicle and a power demand from the vehicle, as described above.

In an example when the compressed air system comprises the air production modulator, APM, the ECU may be configured to control the fuel cell system 100 while a sub-control unit comprised in the APM may be configured to control the electrically operable air compressor 220. Further, in such example, the ECU and the sub-control unit of the APM are arranged in communication with each other to receive and transfer signal indicating e.g. needed inlet pressure of the electrically operable air compressor for supplying compressed air to downstream components such as the pneumatic device. Other arrangements of the control unit are also conceivable.

The control unit 114 and each one of the corresponding sub-control units may include one or more hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the control circuitry or processor (e.g., via a circuit or any other wired, wireless, or network connection) and includes computer code for executing one or more processes described herein.

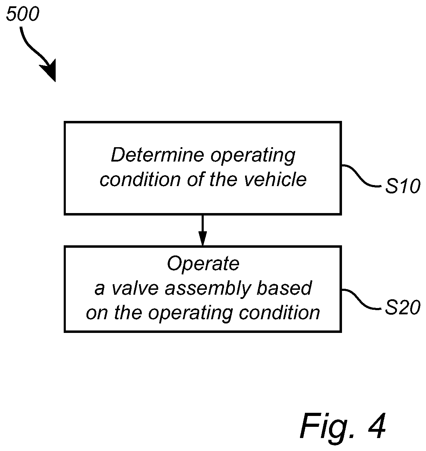

In order to sum up, reference is made to Fig. 4 which is a flow chart of a method 500 of controlling the system according to an example embodiment. During operation, the control unit 114 determines S10 an operating condition of the vehicle and further operates S20 the controllable valve assembly 300 to selectively direct air from multiple fluid supply positions, e.g. two or three positions of the outlet conduit position 180, the air inlet conduit position 184, the air inlet conduit position 186 and the position 188 to the compressed air system in response to determined operating condition of the vehicle. Hence, the control unit 114 controls the flow of air from the fuel cell system 100 to compressed air system 200. Detailed example embodiments of various operating conditions are described above. By way of example, the method comprising controlling the controllable valve assembly to direct air from the outlet conduit position 180 to the compressed air system if the operating condition amounts to a fuel cell performance priority condition; direct air from the air inlet conduit position 186 to the compressed air system if the operating condition amounts to a compressed air system performance priority condition; direct air from the air inlet conduit position 184 to the compressed air system if the operating condition amounts to a fuel cell shut down condition, while, if the operating condition amounts to a combined compressed air system performance priority and a fuel cell shut down condition, the method comprising closing air supply to the fuel cell by controlling at least one control valve arrangements 192, 193, 194 of the fuel cell system and further operating the air compressor 112 by the fuel cell motor 118 to pre-boost the electrically operable air compressor 220.

It should thus be noted that the control unit 114 is generally also in communication with the electrically operable air compressor 220 and the air compressor 112. Further, the control unit 114 is configured to operate the air compressor 112 in response to the activation state of the electrically operable air compressor 220. In particular, the control unit 114 is configured to regulate the compressor speed air flow of the air compressor 112 in response to the activation state of the electrically operable air compressor 220.

Thanks to the system 10 as described above, the electrically operable air compressor 220 may favorably be operable by air from a suitable position of the system so as to allow for a precise operation of the engagement of the electrically operable air compressor 220 in response to the operating condition of the vehicle 1. In addition, it becomes possible to make use of filtered air from the filter 111 of the fuel cell system 100 at the fuel cell cathode side to boost the electrically driven vehicle air compressor 220 of the compressed air system 200 of the vehicle 1. In particular, by using air from the fuel cell air inlet, it becomes possible to provide a compressed air system without a separate air filter, e.g. it becomes possible to omit the additional filter at the vehicle brake compressor inlet. Hence, the system 10 provides a simpler, yet effective system comprising the fuel cell system and the compressed air system.

It is to be understood that the present invention is not limited to the embodiments described above and illustrated in the drawings; rather, the skilled person will recognize that many changes and modifications may be made within the scope of the appended claims.

## Claims

1. A system (10) for a vehicle (1), having a fuel cell system (100) and a compressed air system (200) for supplying compressed air to a pneumatic device,
said fuel cell system comprising:
at least one fuel cell (102) having an anode side and a cathode side,
an air inlet conduit (104) connected to an inlet end (106) of the cathode side for supplying air to the cathode side of the at least one fuel cell,
an air compressor (112) disposed in the air inlet conduit,
an air filter (111) arranged to receive air from an ambient environment, said air filter being arranged at an inlet (121) of the air inlet conduit and upstream said air compressor,
a fluid outlet conduit (108) connected between an outlet end (110) of the cathode side and an inlet side (126) of an expander (116) for supply of an exhaust flow from the cathode side to the expander, and an exhaust conduit (124) connected to an exhaust side (128) of the expander;
said compressed air system comprising:
an electrically operable air compressor (220) connectable to the pneumatic device (210);
wherein the system further comprises a controllable valve assembly (300) for fluidly connecting an air inlet (221) of the electrically operable air compressor to multiple fluid supply positions, said multiple fluid supply fluid positions comprising at least two positions selected from an outlet conduit position (180) upstream the inlet side of the expander, an air inlet conduit position (184) upstream the air compressor (112), an air inlet conduit position (186) downstream the air compressor (112) and a position (188) in fluid communication with an independent air filter (190) in fluid communication with the ambient environment, and
wherein the controllable valve assembly is configured to selectively direct air from the multiple fluid supply positions (180, 184, 186, 188) to the compressed air system in response to an operating condition of the vehicle.

2. The system according to claim 1, wherein, when the controllable valve assembly is arranged and configured to fluidly connect the air inlet (221) of the electrically operable air compressor to the outlet conduit position (180), the controllable valve assembly being configured to direct air from the outlet conduit position to the compressed air system if the operating condition amounts to a fuel cell performance priority condition.

3. The system according to claim 1 or 2, wherein, when the controllable valve assembly is arranged and configured to fluidly connect the air inlet (221) of the electrically operable air compressor to the air inlet conduit position (186), the controllable valve assembly being configured to direct air from the air inlet conduit position (186) to the compressed air system if the operating condition amounts to a compressed air system performance priority condition.

4. The system according to any one of the preceding claims, wherein, when the controllable valve assembly is arranged and configured to fluidly connect the air inlet (221) of the electrically operable air compressor to the air inlet conduit position (184), the controllable valve assembly being configured to direct air from the air inlet conduit position (184) to the compressed air system if the operating condition amounts to a fuel cell shut down condition.

5. The system according to any one of the preceding claims, wherein, when the controllable valve assembly is arranged and configured to fluidly connect the air inlet (221) of the electrically operable air compressor to the position (188), the controllable valve assembly being configured to direct air from the position (188) to the compressed air system if the operating condition amounts to a fuel cell shut down condition.

6. The system according to any one of the preceding claims, wherein a part of the outlet conduit extending between the outlet end of the at least one fuel cell and the inlet side of the expander comprises a first outlet conduit portion (162), a second outlet conduit portion (164) and a water management component (172), the first outlet conduit portion connecting the outlet end of the at least one fuel cell to an inlet side (171) of the water management component, and the second outlet conduit connecting an outlet side (173) of the water management component to the inlet side of the expander, and wherein the outlet conduit position (180) is at the second outlet conduit portion (164).

7. The system according to any one of the preceding claims, wherein a part of the inlet conduit extending between the air compressor and the inlet end of the cathode side comprises a first inlet conduit portion (154), a second inlet conduit portion (156) and a charge air cooler (150), the first inlet conduit portion connecting the air compressor to the charge air cooler, and the second inlet conduit connecting the charge air cooler to the inlet end of the cathode side.

8. The system according to any one of the preceding claims, wherein the air compressor is connected to the expander and a fuel cell motor (118).

9. The system according to any one of the preceding claims, wherein the system further comprises a control unit (114) arranged in communication with the controllable valve assembly (300) so as to control the valve arrangement based on a control signal indicative of the operating condition of the vehicle.

10. The system according to any one of the preceding claims, wherein said at least two positions are the air inlet conduit position (184) upstream the air compressor (112) and the air inlet conduit position (186) downstream the air compressor (112).

11. The system according to any one of the preceding claims 1 to 9, wherein said at least two positions are the outlet conduit position (180) upstream the inlet side of the expander and the position (188) in fluid communication with an independent air filter (190) in fluid communication with the ambient environment.

12. The system according to any one of the preceding claims 1 to 9, wherein the multiple fluid supply positions comprises at least three positions, said three positions being at least the outlet conduit position (180) upstream the inlet side of the expander, the air inlet conduit position (184) upstream the air compressor (112) and the air inlet conduit position (186) downstream the air compressor (112).

13. The system according to any one of the preceding claims 1 to 9, wherein the multiple fluid supply positions comprises at least three positions, said three positions being at least the outlet conduit position (180) upstream the inlet side of the expander, the air inlet conduit position (186) downstream the air compressor (112) and the position (188) in fluid communication with an independent air filter (190) in fluid communication with the ambient environment.

14. A method of controlling a system of a vehicle, said system comprising a fuel cell system (100) and a compressed air system (200) for supplying compressed air to a pneumatic vehicle device, said fuel cell system comprising at least one fuel cell (102) having an anode side and a cathode side, an air inlet conduit (104) connected to an inlet end (106) of the cathode side for supplying air to the cathode side of the at least one fuel cell, an air compressor (112) disposed in the air inlet conduit, an air filter (111) arranged to receive air from an ambient environment, said air filter being arranged at an inlet (121) of the air inlet conduit and upstream said air compressor, a fluid outlet conduit (108) connected between an outlet end (110) of the cathode side and an inlet side (126) of an expander (116) for supply of an exhaust flow from the cathode side to the expander, and an exhaust conduit (124) connected to an exhaust side (128) of the expander; said compressed air system comprising an electrically operable air compressor (220) connectable to the pneumatic vehicle device (210); wherein the system further comprises a controllable valve assembly (300) for fluidly connecting an air inlet (221) of the electrically operable air compressor to multiple fluid supply positions, said multiple fluid supply fluid positions comprising at least two positions selected from an outlet conduit position (180) upstream the inlet side of the expander, an air inlet conduit position (184) upstream the air compressor (112), an air inlet conduit position (186) downstream the air compressor (112) and a position (188) in fluid communication with an independent air filter (190) in fluid communication with the ambient environment, wherein the method comprises:
determining (S10) an operating condition of the vehicle, and
operating (S20) the controllable valve assembly (300) to selectively direct air from the multiple fluid supply positions (180, 184, 186, 188) to the compressed air system in response to determined operating condition of the vehicle.

15. A vehicle at least partially propelled by an electric traction motor (101), the electric traction motor being electrically connected to a fuel cell system of a system according to any one of claims 1 - 13.

## Patentansprüche

1. System (10) für ein Fahrzeug (1), das ein Brennstoffzellensystem (100) und ein Druckluftsystem (200) zur Versorgung einer pneumatischen Vorrichtung mit Druckluft aufweist, das Brennstoffzellensystem umfassend:
mindestens eine Brennstoffzelle (102), die eine Anodenseite und einer Kathodenseite aufweist,
eine Lufteinlassleitung (104), die mit einem Einlassende (106) der Kathodenseite verbunden ist, um der Kathodenseite der mindestens einen Brennstoffzelle Luft zuzuführen,
einen Luftkompressor (112), der in der Lufteinlassleitung angeordnet ist,
einen Luftfilter (111), der angeordnet ist, um Luft aus einer Umgebung aufzunehmen, wobei der Luftfilter an einem Einlass (121) der Lufteinlassleitung und vor dem Luftkompressor angeordnet ist,
eine Fluidauslassleitung (108), die zwischen einem Auslassende (110) der Kathodenseite und einer Einlassseite (126) eines Expanders (116) angeschlossen ist, um einen Abgasstrom von der Kathodenseite zu dem Expander zuzuführen, und eine Auslassleitung (124), die mit einer Auslassseite (128) des Expanders verbunden ist;
das Druckluftsystem umfassend:
einen elektrisch betreibbaren Luftkompressor (220), der mit der pneumatischen Vorrichtung (210) verbunden werden kann;
wobei das System ferner eine steuerbare Ventilanordnung (300) zur Fluidverbindung eines Lufteinlasses (221) des elektrisch betreibbaren Luftkompressors mit mehreren Fluidversorgungspositionen umfasst, wobei die mehreren Fluidversorgungspositionen mindestens zwei Positionen umfassen, die aus einer Auslassleitungsposition (180) vor der Einlassseite des Expanders, einer Lufteinlassleitungsposition (184) vor dem Luftkompressor (112), einer Lufteinlassleitungsposition (186) nach dem Luftkompressor (112) und einer Position (188) in Fluidverbindung mit einem unabhängigen Luftfilter (190) in Fluidverbindung mit der Umgebung ausgewählt sind, und
wobei die steuerbare Ventilanordnung konfiguriert ist, um in Abhängigkeit von einem Betriebszustand des Fahrzeugs selektiv Luft von den mehreren Fluidversorgungspositionen (180, 184, 186, 188) zu dem Druckluftsystem zu leiten.

2. System nach Anspruch 1, wobei, wenn die steuerbare Ventilanordnung so angeordnet und konfiguriert ist, dass sie den Lufteinlass (221) des elektrisch betreibbaren Luftkompressors mit der Auslassleitungsposition (180) fluidisch verbindet, die steuerbare Ventilanordnung so konfiguriert ist, dass sie Luft von der Auslassleitungsposition zum Druckluftsystem leitet, wenn der Betriebszustand einer Brennstoffzellen-Leistungsprioritätsbedingung entspricht.

3. System nach Anspruch 1 oder 2, wobei, wenn die steuerbare Ventilanordnung so angeordnet und konfiguriert ist, dass sie den Lufteinlass (221) des elektrisch betreibbaren Luftkompressors mit der Lufteinlassleitungsposition (186) fluidisch verbindet, die steuerbare Ventilanordnung so konfiguriert ist, dass sie Luft von der Lufteinlassleitungsposition (186) zu dem Druckluftsystem leitet, wenn der Betriebszustand einer Druckluftsystem-Leistungsprioritätsbedingung entspricht.

4. System nach einem der vorhergehenden Ansprüche, wobei, wenn die steuerbare Ventilanordnung so angeordnet und konfiguriert ist, dass sie den Lufteinlass (221) des elektrisch betreibbaren Luftkompressors mit der Lufteinlassleitungsposition (184) fluidisch verbindet, die steuerbare Ventilanordnung so konfiguriert ist, dass sie Luft von der Lufteinlassleitungsposition (184) zum Druckluftsystem leitet, wenn der Betriebszustand einer Brennstoffzellen-Abschaltbedingung entspricht.

5. System nach einem der vorhergehenden Ansprüche, wobei, wenn die steuerbare Ventilanordnung so angeordnet und konfiguriert ist, dass sie den Lufteinlass (221) des elektrisch betreibbaren Luftkompressors mit der Auslassleitungsposition (188) fluidisch verbindet, die steuerbare Ventilanordnung so konfiguriert ist, dass sie Luft von der Auslassleitungsposition (188) zum Druckluftsystem leitet, wenn der Betriebszustand einer Brennstoffzellen-Abschaltbedingung entspricht.

6. System nach einem der vorhergehenden Ansprüche, wobei ein Teil der Auslassleitung, der sich zwischen dem Auslassende der mindestens einen Brennstoffzelle und der Einlassseite des Expanders erstreckt, einen ersten Auslassleitungsabschnitt (162), einen zweiten Auslassleitungsabschnitt (164) und eine Wassermanagementkomponente (172) umfasst, wobei der erste Auslassleitungsabschnitt das Auslassende der mindestens einen Brennstoffzelle mit einer Einlassseite (171) der Wassermanagementkomponente verbindet und die zweite Auslassleitung eine Auslassseite (173) der Wassermanagementkomponente mit der Einlassseite des Expanders verbindet, und wobei sich die Auslassleitungsposition (180) an der zweiten Auslassleitungsposition (164) befindet.

7. System nach einem der vorhergehenden Ansprüche, wobei ein Teil der Einlassleitung, der sich zwischen dem Luftkompressor und dem Einlassende der Kathodenseite erstreckt, einen ersten Einlassleitungsabschnitt (154), einen zweiten Einlassleitungsabschnitt (156) und einen Ladeluftkühler (150) umfasst, wobei der erste Einlassleitungsabschnitt den Luftkompressor mit dem Ladeluftkühler verbindet und der zweite Einlassleitungsabschnitt den Ladeluftkühler mit dem Einlassende der Kathodenseite verbindet.

8. System nach einem der vorhergehenden Ansprüche, wobei der Luftkompressor mit dem Expander und einem Brennstoffzellenmotor (118) verbunden ist.

9. System nach einem der vorhergehenden Ansprüche, wobei das System ferner eine Steuereinheit (114) umfasst, die in Verbindung mit der steuerbaren Ventilanordnung (300) angeordnet ist, um die Ventilanordnung auf der Grundlage eines Steuersignals zu steuern, das den Betriebszustand des Fahrzeugs anzeigt.

10. System nach einem der vorhergehenden Ansprüche, wobei die mindestens zwei Positionen die Lufteinlassleitungsposition (184) vor dem Luftkompressor (112) und die Lufteinlassleitungsposition (186) nach dem Luftkompressor (112) sind.

11. System nach einem der vorhergehenden Ansprüche 1 bis 9, wobei die mindestens zwei Positionen die Auslassleitungsposition (180) vor der Einlassseite des Expanders und die Position (188) in Fluidverbindung mit einem unabhängigen Luftfilter (190) in Fluidverbindung mit der Umgebung sind.

12. System nach einem der vorhergehenden Ansprüche 1 bis 9, wobei die mehreren Fluidversorgungspositionen mindestens drei Positionen umfassen, wobei die drei Positionen mindestens die Auslassleitungsposition (180) vor der Einlassseite des Expanders, die Lufteinlassleitungsposition (184) vor dem Luftkompressor (112) und die Lufteinlassleitungsposition (186) nach dem Luftkompressor (112) sind.

13. System nach einem der vorhergehenden Ansprüche 1 bis 9, wobei die mehreren Fluidversorgungspositionen mindestens drei Positionen umfassen, wobei die drei Positionen mindestens die Auslassleitungsposition (180) vor der Einlassseite des Expanders, die Lufteinlassleitungsposition (186) nach dem Luftkompressor (112) und die Position (188) in Fluidverbindung mit einem unabhängigen Luftfilter (190) in Fluidverbindung mit der Umgebung sind.

14. Verfahren zur Steuerung eines Systems eines Fahrzeugs, das System umfassend ein Brennstoffzellensystem (100) und ein Druckluftsystem (200) zur Versorgung einer pneumatischen Vorrichtung mit Druckluft, das Brennstoffzellensystem umfassend mindestens eine Brennstoffzelle (102) mit einer Anodenseite und einer Kathodenseite, eine Lufteinlassleitung (104), die mit einem Einlassende (106) der Kathodenseite verbunden ist, um der Kathodenseite der mindestens einen Brennstoffzelle Luft zuzuführen, einen Luftkompressor (112), der in der Lufteinlassleitung angeordnet ist, einen Luftfilter (111), der angeordnet ist, um Luft aus einer Umgebung aufzunehmen, wobei der Luftfilter an einem Einlass (121) der Lufteinlassleitung und vor dem Luftkompressor angeordnet ist, eine Fluidauslassleitung (108), die zwischen einem Auslassende (110) der Kathodenseite und einer Einlassseite (126) eines Expanders (116) angeschlossen ist, um einen Abgasstrom von der Kathodenseite zu dem Expander zuzuführen, und eine Auslassleitung (124), die mit einer Auslassseite (128) des Expanders verbunden ist; wobei das Druckluftsystem einen elektrisch betreibbaren Luftkompressor (220) umfasst, der mit der pneumatischen Fahrzeugvorrichtung (210) verbunden werden kann; wobei das System ferner eine steuerbare Ventilanordnung (300) zum Verbinden eines Lufteinlasses (221) des elektrisch betreibbaren Luftkompressors mit mehreren Fluidversorgungspositionen umfasst, wobei die mehreren Fluidversorgungspositionen mindestens zwei Positionen umfassen, die aus einer Auslassleitungsposition (180) vor der Einlassseite des Expanders, einer Lufteinlassleitungsposition (184) vor dem Luftkompressor (112), einer Lufteinlassleitungsposition (186) nach dem Luftkompressor (112) und einer Position (188) in Fluidverbindung mit einem unabhängigen Luftfilter (190) in Fluidverbindung mit der Umgebung ausgewählt sind, wobei das Verfahren umfasst:
Bestimmen (S10) eines Betriebszustands des Fahrzeugs, und
Betätigen (S20) der steuerbaren Ventilanordnung (300), um selektiv Luft von den mehreren Fluidversorgungspositionen (180, 184, 186, 188) zu dem Druckluftsystem in Reaktion auf den bestimmten Betriebszustand des Fahrzeugs zuzuführen.

15. Fahrzeug, das mindestens teilweise von einem elektrischen Antriebsmotor (101) angetrieben wird, wobei der elektrische Antriebsmotor elektrisch mit einem Brennstoffzellensystem eines Systems nach einem der Ansprüche 1-13 verbunden ist.

## Revendications

1. Système (10) pour un véhicule (1), comportant un système de pile à combustible (100) et un système d'air comprimé (200) destiné à fournir de l'air comprimé à un dispositif pneumatique, ledit système d'air comprimé comprenant :
au moins une pile à combustible (102) comportant un côté anode et un côté cathode,
un conduit d'entrée d'air (104) relié à une extrémité d'entrée (106) du côté cathode pour fournir de l'air au côté cathode de l'au moins une pile à combustible,
un compresseur d'air (112) disposé dans le conduit d'entrée d'air,
un filtre à air (111) conçu pour recevoir de l'air à partir d'un environnement ambiant, ledit filtre à air étant agencé au niveau d'une entrée (121) du conduit d'entrée d'air et en amont dudit compresseur d'air,
un conduit de sortie de fluide (108) relié entre une extrémité de sortie (110) du côté cathode et un côté entrée (126) d'un détendeur (116) pour fournir un flux d'échappement du côté cathode au détendeur, et un conduit d'échappement (124) relié à un côté échappement (128) du détendeur ;
ledit système d'air comprimé comprenant :
un compresseur d'air actionnable électriquement (220) apte à être relié au dispositif pneumatique (210) ;
dans lequel le système comprend en outre un ensemble de soupape commandable (300) permettant de relier fluidiquement une entrée **d'air** (221) du compresseur **d'air** actionnable électriquement à de multiples positions d'alimentation en fluide, lesdites multiples positions d'alimentation en fluide comprenant au moins deux positions sélectionnées parmi une position de conduit de sortie (180) en amont du côté entrée du détendeur, une position de conduit d'entrée (184) en amont du compresseur d'air (112), une position de conduit d'entrée (186) en aval du compresseur d'air (112) et une position (188) en communication fluidique avec un filtre à air indépendant (190) en communication fluidique avec l'environnement ambiant, et
dans lequel l'ensemble de soupape commandable est configuré pour diriger sélectivement de l'air à partir des multiples positions d'alimentation en fluide (180, 184, 186, 188) vers le système d'air comprimé en réponse à une condition de fonctionnement du véhicule.

2. Système selon la revendication 1, dans lequel, lorsque l'ensemble de soupape commandable est agencé et configuré pour relier fluidiquement l'entrée d'air (221) du compresseur d'air actionnable électriquement à la position de conduit de sortie (180), l'ensemble de soupape commandable est configuré pour diriger de l'air à partir de la position de conduit de sortie vers le système d'air comprimé si la condition de fonctionnement équivaut à une condition de priorité de performance de pile à combustible.

3. Système selon la revendication 1 ou 2, dans lequel, lorsque l'ensemble de soupape commandable est agencé et configuré pour relier fluidiquement l'entrée d'air (221) du compresseur d'air actionnable électriquement à la position de conduit d'entrée (186), l'ensemble de soupape commandable est configuré pour diriger de l'air à partir de la position de conduit d'entrée d'air (186) vers le système d'air comprimé si la condition de fonctionnement équivaut à une condition de priorité de performance de système d'air comprimé.

4. Système selon l'une quelconque des revendications précédentes, dans lequel, lorsque l'ensemble de soupape commandable est agencé et configuré pour relier fluidiquement l'entrée d'air (221) du compresseur d'air actionnable électriquement à la position de conduit d'entrée d'air (184), l'ensemble de soupape commandable est configuré pour diriger de l'air à partir de la position de conduit d'entrée d'air (184) vers le système d'air comprimé si la condition de fonctionnement équivaut à une condition d'arrêt de pile à combustible.

5. Système selon l'une quelconque des revendications précédentes, dans lequel, lorsque l'ensemble de soupape commandable est agencé et configuré pour relier fluidiquement l'entrée d'air (221) du compresseur d'air actionnable électriquement à la position (188), l'ensemble de soupape commandable est configuré pour diriger de l'air à partir de la position (188) vers le système d'air comprimé si la condition de fonctionnement équivaut à une condition d'arrêt de pile à combustible.

6. Système selon l'une quelconque des revendications précédentes, dans lequel une partie du conduit de sortie s'étendant entre l'extrémité de sortie de l'au moins une pile à combustible et le côté entrée du détendeur comprend une première partie de conduit de sortie (162), une deuxième partie de conduit de sortie (164) et un composant de gestion d'eau (172), la première partie de conduit de sortie reliant l'extrémité de sortie de l'au moins une pile à combustible à un côté entrée (171) du composant de gestion d'eau, et le deuxième conduit de sortie reliant un côté sortie (173) du composant de gestion d'eau au côté entrée du détendeur, et dans lequel la position de conduit de sortie (180) se trouve au niveau de la deuxième partie de conduit de sortie (164).

7. Système selon l'une quelconque des revendications précédentes, dans lequel une partie du conduit d'entrée s'étendant entre le compresseur d'air et l'extrémité d'entrée du côté cathode comprend une première partie de conduit d'entrée (154), une deuxième partie de conduit d'entrée (156) et un refroidisseur d'air de charge (150), la première partie de conduit d'entrée reliant le compresseur d'air au refroidisseur d'air de charge, et le deuxième partie de conduit d'entrée reliant le refroidisseur d'air de charge à l'extrémité d'entrée du côté cathode.

8. Système selon l'une quelconque des revendications précédentes, dans lequel le compresseur d'air est relié au détendeur et à un moteur de pile à combustible (118).

9. Système selon l'une quelconque des revendications précédentes, dans lequel le système comprend en outre une unité de commande (114) agencée en communication avec l'ensemble de soupape commandable (300) de manière à commander l'ensemble de soupape sur la base d'un signal de commande indiquant la condition de fonctionnement du véhicule.

10. Système selon l'une quelconque des revendications précédentes, dans lequel lesdites au moins deux positions sont la position de conduit d'entrée d'air (184) en amont du compresseur d'air (112) et la position de conduit d'entrée d'air (186) en aval du compresseur d'air (112).

11. Système selon l'une quelconque des revendications précédentes 1 à 9, dans lequel lesdites au moins deux positions sont la position de conduit de sortie (180) en amont du côté entrée du détendeur et la position (188) en communication fluidique avec un filtre à air indépendant (190) en communication fluidique avec l'environnement ambiant.

12. Système selon l'une quelconque des revendications précédentes 1 à 9, dans lequel les multiples positions d'alimentation en fluide comprennent au moins trois positions, lesdites trois positions étant au moins la position de conduit de sortie (180) en amont du côté entrée du détendeur, la position de conduit d'entrée d'air (184) en amont du compresseur d'air (112) et la position de conduit d'entrée d'air (186) en aval du compresseur d'air (112).

13. Système selon l'une quelconque des revendications précédentes 1 à 9, dans lequel les multiples positions d'alimentation en fluide comprennent au moins trois positions, lesdites trois positions étant au moins la position de conduit de sortie (180) en amont du côté entrée du détendeur, la position de conduit d'entrée d'air (186) en aval du compresseur d'air (112) et la positions (188) en communication fluidique avec un filtre à air indépendant (190) en communication fluidique avec l'environnement ambiant.

14. Procédé de commande d'un système d'un véhicule, ledit système comprenant un système de pile à combustible (100) et un système d'air comprimé (200) destiné à fournir de l'air comprimé à un dispositif de véhicule pneumatique, ledit système de pile à combustible comprenant au moins une pile à combustible (102) comportant un côté anode et un côté cathode, un conduit d'entrée d'air (104) relié à une extrémité d'entrée (106) du côté cathode pour fournir de l'air au côté cathode de l'au moins une pile à combustible, un compresseur d'air (112) disposé dans le conduit d'entrée d'air, un filtre à air (111) conçu pour recevoir de l'air à partir d'un environnement ambiant, ledit filtre à air étant agencé au niveau d'une entrée (121) du conduit d'entrée d'air et en amont dudit compresseur d'air, un conduit de sortie de fluide (108) relié entre une extrémité de sortie (110) du côté cathode et un côté entrée (126) d'un détendeur (116) pour fournir un flux d'échappement du côté cathode au détendeur, et un conduit d'échappement (124) relié à un côté échappement (128) du détendeur ; ledit système d'air comprimé comprenant un compresseur d'air actionnable électriquement (220) apte à être relié au dispositif pneumatique (210) ; dans lequel le système comprend en outre un ensemble de soupape commandable (300) permettant de relier fluidiquement une entrée d'air (221) du compresseur d'air actionnable électriquement à de multiples positions d'alimentation en fluide, lesdites multiples positions d'alimentation en fluide comprenant au moins deux positions sélectionnées parmi une position de conduit de sortie (180) en amont du côté entrée du détendeur, une position de conduit d'entrée (184) en amont du compresseur d'air (112), une position de conduit d'entrée (186) en aval du compresseur d'air (112) et une position (188) en communication fluidique avec un filtre à air indépendant (190) en communication fluidique avec l'environnement ambiant, dans lequel le procédé comprend :
la détermination (S10) d'une condition de fonctionnement du véhicule, et
l'actionnement (S20) de l'ensemble de soupape commandable (300) pour diriger sélectivement de l'air à partir des multiples positions d'alimentation en fluide (180, 184, 186, 188) vers le système d'air comprimé en réponse à une condition de fonctionnement du véhicule.

15. Véhicule au moins partiellement propulsé par un moteur de traction électrique (101), le moteur de traction électrique étant relié électriquement à un système de pile à combustible d'un système selon l'une quelconque des revendications 1 à 13.
